# FASCICULE DE BREVET EUROPEEN

(11) **EP 3 934 879 B1**
(45) Date de publication et mention de la délivrance du brevet: **24.05.2023**
(21) Numéro de dépôt: 20721285.3
(22) Date de dépôt: 28.02.2020
(51) Int. Cl.: B29C 33/38, B29C 33/50, F16B 11/00, B29C 65/48, B29C 65/78, B29D 99/00, F01D 25/28, B23P 15/04, B29L 31/08, F01D 5/14, B29C 65/10

(54) **ASSEMBLAGE D'UNE AUBE DIRECTRICE DE SORTIE POUR TURBOMACHINE D'AÉRONEF À L'AIDE D'UNE BÂCHE À VIDE DE TAILLE RÉDUITE**
ANORDNUNG EINER AUSLASSLEITSCHAUFEL FÜR EIN FLUGTRIEBWERK MIT VERKLEINERTER VAKUUMPLATTE
ASSEMBLY OF AN OUTLET GUIDE VANE FOR AN AIRCRAFT TURBINE ENGINE USING A REDUCED-SIZE VACUUM SHEET

(30) Priorité: 04.03.2019 FR 1902203
(43) Date de publication de la demande: 12.01.2022
(73) Titulaire: SAFRAN AIRCRAFT ENGINES, 75015 Paris (FR)
(72) Inventeur: BIENVENU, Steven Gérard Joseph, 77550 Moissy-Cramayel (FR); BOSSAN, Pierre Antoine, 77550 Moissy-Cramayel (FR); LAMOUCHE, Damien Bruno, 77550 Moissy-Cramayel (FR)
(74) Mandataire: Brevalex
(86) Numéro de dépôt international: PCT/FR2020/050396
(87) Numéro de publication internationale: WO 2020/178510

(56) Documents cités:
- EP-A1- 3 434 867
- WO-A1-2013/178963
- FR-A1- 2 990 642

## Description

### Domaine technique

La présente invention se rapporte au domaine des turbomachines d'aéronef du type turboréacteur à double flux, et en particulier à la fabrication d'aubes directrices exposées au flux d'air secondaire circulant dans la veine secondaire d'un tel turboréacteur.

Ces aubes directrices sont de préférence destinées à former un aubage directeur de sortie, également dénommé « OGV » (de l'anglais « Outlet Guide Vane »), prévu pour redresser le flux d'air secondaire en sortie du turboréacteur, comme cela est par exemple connu des documents FR 2 990 642 A1, WO2013/178963 A1 et EP 3 434 867 A1.

### État de la technique antérieure

La réalisation d'une aube directrice de sortie nécessite généralement l'assemblage de deux pièces préfabriquées. L'une de ces pièces forme un corps de l'aube qui comporte des creux destinés à réduire sa masse. Ce corps comprend notamment une première face externe formant un extrados de l'aube. L'autre pièce est un capot agencé pour être fixé au corps de manière à former, avec une deuxième face externe du corps, un intrados de l'aube.

Dans l'état de la technique antérieure, la fixation du corps et du capot est généralement réalisée par collage de ces pièces à l'aide d'une résine polymérisable. La polymérisation implique de chauffer la résine, typiquement à une température comprise entre 160°C et 180°C, dans une configuration dans laquelle le capot est maintenu plaqué contre le corps.

Pour ce faire, une technique conventionnelle consiste à placer le corps et le capot dans une poche hermétique, à mettre cette poche sous vide, puis à chauffer cet ensemble au sein d'un autoclave. La mise sous vide de la poche permet notamment d'éviter l'apparition de porosités dans le joint de résine polymérisé, de telles porosités étant susceptibles d'apparaître sous l'effet d'un dégagement de gaz produit par la résine lors de sa polymérisation. Le différentiel de pression entre l'intérieur de la poche, mise sous vide, et l'enceinte de l'autoclave permet de générer un effort de plaquage du capot contre le corps apte à former un joint de résine d'épaisseur optimale, typiquement entre 80 µm et 300 µm, et à assurer une bonne adhésion aux interfaces joint-corps et joint-capot. L'effort de plaquage correspond typiquement à une pression relative comprise entre 1^{∗}10⁵ Pa et 5^{∗}10⁵ Pa.

Cette technique présente plusieurs inconvénients. Notamment, le placement du corps et du capot dans la poche hermétique est une étape longue et délicate au cours de laquelle celle-ci peut se perforer ou se déchirer. En effet, à ce stade de fabrication de l'aube, le corps et le capot comprennent typiquement des arêtes vives ou des parties saillantes tranchantes. Une perforation ou une déchirure de la poche empêchent de mettre celle-ci sous vide et d'accoster correctement le corps et le capot, ce qui entraîne typiquement des défauts géométriques et mécaniques de l'aube. De plus, une telle poche hermétique est un consommable à usage unique qu'il n'est pratiquement pas possible de réparer, une poche déjà utilisée pouvant comprendre des micro-perforations invisibles à l'oeil nu et/ou de larges déchirures. Par ailleurs, les parties de la poche en excès autour de l'aube forment des plis susceptibles d'induire des turbulences dans l'écoulement de gaz au sein de l'autoclave, de telles turbulences pouvant entraîner des différences de température de chauffage entre différentes parties de l'aube.

La présente invention a pour but de procurer un procédé d'assemblage d'aube et un outillage améliorant la fiabilité de l'assemblage.

Un autre but de l'invention est de réduire la durée de l'assemblage.

### Exposé de l'invention

A cet effet, l'invention a pour objet un procédé d'assemblage d'une aube pour aubage directeur de sortie d'un turboréacteur d'aéronef à double flux, comprenant :
- une opération de dépôt d'une résine polymérisable sur une face de jonction d'un corps de ladite aube,
- une opération de positionnement d'un capot de l'aube sur la face de jonction recouverte de la résine de sorte qu'une face externe du capot et une face externe du corps forment ensemble un intrados de cette aube,

- une opération de mise en place d'une bâche contre l'intrados de l'aube,
- une opération de mise sous vide d'un espace compris entre la bâche et l'intrados,
- une opération de chauffage apte à polymériser la résine et fixer ainsi le capot sur le corps de l'aube.

Selon l'invention, ce procédé comprend, avant ou pendant l'opération de mise en place de la bâche contre l'intrados de l'aube, une opération de dépôt d'un cordon de mastic d'étanchéité sur la face externe du corps, autour de la face de jonction du corps, de manière à délimiter ledit espace compris entre la bâche et l'intrados, la bâche étant dimensionnée de sorte qu'une partie périphérique de celle-ci soit plaquée contre le cordon de mastic d'étanchéité lors de la mise en place de cette bâche contre l'intrados de l'aube.

Autrement dit, la bâche est dimensionnée pour recouvrir uniquement l'intrados de l'aube, ce qui réduit considérablement les risques de déchirure ou de perforation de la bâche par rapport à une poche hermétique conventionnelle. En effet, les parties ou arêtes tranchantes de l'aube susceptibles de perforer ou déchirer la bâche sont typiquement situées au niveau de zones de jonction entre différentes faces de l'aube, en particulier au niveau du pied et de la tête de l'aube, ainsi que des bords d'attaque et de fuite. Dans le procédé de l'invention, la bâche - ou en tous cas la partie de la bâche délimitant l'espace mis sous vide - ne recouvre pas ou n'enveloppe pas de telles parties de l'aube.

De plus, l'invention permet d'éviter d'avoir des parties de bâche en excès formant des plis autour de l'aube, ce qui permet d'homogénéiser le chauffage au sein de l'aube.

La bâche ayant une taille réduite par rapport à une poche hermétique conventionnelle, il en résulte un coût de fabrication et un impact environnemental réduits. La réduction de la taille de la bâche permet par ailleurs d'augmenter le nombre d'aubes pouvant être simultanément chauffés au sein d'un autoclave.

La durée nécessaire pour installer une telle bâche est aussi réduite par rapport à la durée requise pour installer une poche hermétique conventionnelle.

Plus généralement, l'invention permet d'améliorer la fiabilité de l'assemblage, notamment en réduisant les risques de perte de vide pendant le chauffage.

Selon une première variante de l'invention, le dépôt du cordon de mastic d'étanchéité et la mise en place de la bâche peuvent être réalisés manuellement.

Selon une deuxième variante de l'invention, le dépôt du cordon de mastic d'étanchéité et la mise en place de la bâche peuvent être réalisés à l'aide d'un outillage apte à automatiser au moins partiellement ces opérations.

Dans un mode de réalisation appartenant à cette deuxième variante, le corps et le capot positionné sur la face de jonction du corps peuvent être disposés sur une partie fixe d'un outillage et la bâche peut être fixée sur une partie mobile de cet outillage, l'opération de mise en place de la bâche comprenant une opération de déplacement de la partie mobile par rapport à la partie fixe de cet outillage de manière à disposer la bâche contre l'intrados de l'aube.

Une telle mise en place de la bâche permet d'améliorer la qualité et la reproductibilité de cette opération, ce qui permet d'améliorer encore davantage la fiabilité de l'assemblage.

Le cordon de mastic d'étanchéité peut être déposé sur la bâche avant l'opération de déplacement de la partie mobile de l'outillage, l'opération de dépôt de ce cordon de mastic d'étanchéité sur la face externe du corps résultant de cette opération de déplacement de la partie mobile par rapport à la partie fixe de l'outillage.

De préférence, le procédé peut comprendre, après l'opération de déplacement de la partie mobile de l'outillage, une opération de plaquage de cette partie mobile contre le cordon de mastic d'étanchéité de manière à exercer sur ce cordon de mastic d'étanchéité un effort de compression prédéterminé apte à sceller ledit espace compris entre la bâche et l'intrados.

Le scellage peut ainsi être parfaitement maîtrisé, ce qui entraîne aussi une amélioration de la fiabilité de l'assemblage.

L'invention concerne aussi un outillage pour mettre en oeuvre un tel procédé, cet outillage comprenant une partie fixe et une partie mobile, la partie fixe étant agencée pour recevoir le corps de l'aube et le capot positionné sur la face de jonction de ce corps, la partie mobile étant agencée pour recevoir fixement la bâche et pour être déplacée par rapport à ladite partie fixe de cet outillage de manière à disposer la bâche contre l'intrados de l'aube.

Un tel outillage permet notamment de faciliter et d'automatiser la mise en place de la bâche contre l'intrados de l'aube ainsi que le dépôt du cordon de mastic d'étanchéité sur le corps de l'aube. L'assemblage peut ainsi être réalisé plus rapidement et de manière plus fiable.

Pour recevoir fixement la bâche, l'outillage peut comprendre un simple adhésif placé entre la partie mobile et la bâche.

Dans un mode de réalisation, l'outillage peut comprendre un dispositif de transmission d'effort configuré pour exercer ledit effort de compression prédéterminé.

Ce dispositif de transmission d'effort peut comprendre un ou plusieurs organes élastiques tels que des ressorts.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en demi-coupe axiale d'un turboréacteur à double flux comprenant un aubage directeur de sortie ;
[Fig. 2] est une vue schématique en coupe transversale d'une aube pour un aubage directeur de sortie d'un turboréacteur tel que celui de la figure 1 ;
[Fig. 3] est une vue schématique en perspective d'un corps de l'aube de la figure 2 ;
[Fig. 4] est une vue schématique en perspective d'un capot de l'aube de la figure 2 ;
[Fig. 5] est une vue schématique en coupe transversale de l'aube de la figure 2, équipée d'une bâche et d'un dispositif d'extraction d'air ;
[Fig. 6] est une vue schématique en coupe transversale d'une partie fixe d'un outillage de mise en place d'une bâche, recevant l'aube de la figure 2 ;
[Fig. 7] est une vue schématique en coupe transversale d'une partie mobile dudit outillage de mise en place d'une bâche, recevant une bâche et un dispositif d'extraction d'air;
[Fig. 8] est une vue schématique en coupe transversale dudit outillage de mise en place d'une bâche, montrant la partie mobile de cet outillage rabattue contre la partie fixe de cet outillage.

### Description détaillée de modes de réalisation

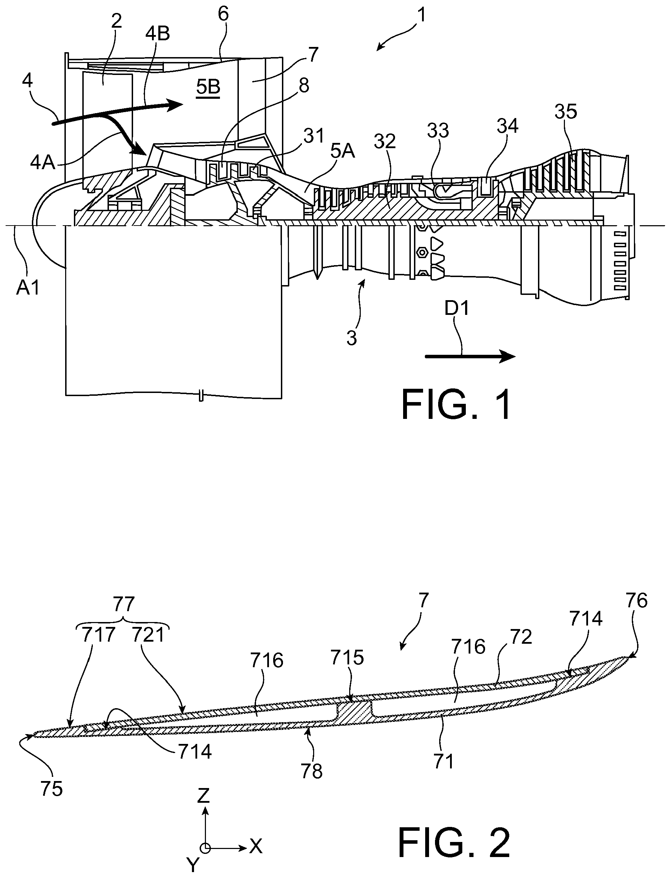

En référence à la figure 1, il est représenté un turboréacteur 1 à double flux et à double corps, pour aéronef (non représenté) du type avion de ligne.

Le turboréacteur 1 présente un axe central longitudinal A1 autour duquel s'étendent ses différents composants, en particulier, de l'amont vers l'aval du turboréacteur 1, une soufflante 2 et un générateur de gaz 3. Dans l'ensemble de cette description, les termes « amont » et « aval » sont définis relativement à une direction principale D1 d'écoulement des gaz au sein du turboréacteur 1. Le générateur de gaz 3 comporte, de l'amont vers l'aval, un compresseur basse pression 31, un compresseur haute pression 32, une chambre de combustion 33, une turbine haute pression 34 et une turbine basse pression 35.

De manière conventionnelle, lors du fonctionnement d'un tel turboréacteur 1, un écoulement d'air 4 pénètre dans le turboréacteur 1 par une entrée d'air, traverse la soufflante 2 puis se divise en un flux primaire 4A central et un flux secondaire 4B. Le flux primaire 4A s'écoule dans une veine principale 5A de circulation des gaz traversant les compresseurs 31 et 32, la chambre de combustion 33 et les turbines 34 et 35. Le flux secondaire 4B s'écoule quant à lui dans une veine secondaire 5B entourant le générateur de gaz 3 et délimitée radialement vers l'extérieur par une virole extérieure 6 du turboréacteur 1.

Dans cet exemple, le turboréacteur 1 comprend une couronne d'aubes directrices 7 s'étendant dans la veine secondaire 5B, en aval de la soufflante 2. Ces aubes 7 forment un aubage directeur de sortie (OGV) qui relie la virole extérieure 6 à un carter 8 entourant le compresseur basse pression 31. Les aubes 7 sont espacées circonférentiellement les unes des autres et permettent de redresser le flux secondaire 4B en sortie de la veine secondaire 5B. Ces aubes 7 peuvent aussi assurer une fonction structurale.

L'invention se rapporte plus spécifiquement à la fabrication d'une telle aube 7.

Une aube 7 conforme à l'invention est représentée à la figure 2.

De manière connue, la réalisation d'une telle aube 7 comprend une opération d'assemblage de deux pièces préfabriquées. En référence aux figures 2 à 4, l'une de ces pièces forme un corps 71, et l'autre pièce forme un capot 72.

Dans l'exemple illustré à la figure 1, l'aube 7 s'étend radialement dans la veine secondaire 5B sans inclinaison axiale, c'est-à-dire sans inclinaison le long de l'axe longitudinal A1.

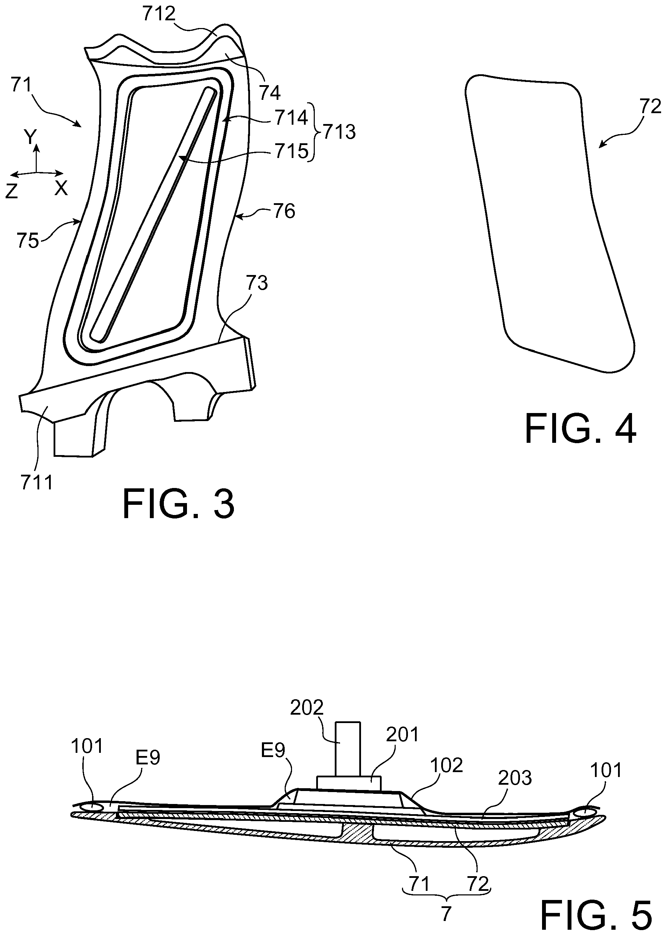

Dans l'exemple de la figure 3, le corps 71 de l'aube 7 présente une inclinaison axiale, l'axe X du repère de cette figure étant sensiblement parallèle à l'axe central longitudinal A1 du turboréacteur 1 lorsque cette aube 7 est montée sur ce turboréacteur 1.

L'aube 7 comprend une partie aérodynamique, destinée à être exposée au flux secondaire 4B. La partie aérodynamique de l'aube 7 est située entre un pied 711 et une tête 712 de cette aube 7 (voir figure 3).

Dans cet exemple, le pied 711 sert à la fixation de l'aube 7 sur le carter 8 du compresseur basse pression 31, tandis que la tête 712 sert à la fixation de cette aube 7 sur la virole extérieure 6.

Le pied 711 et la tête 712 de l'aube 7 comprennent chacun une plateforme 73 et 74, respectivement, ces plateformes étant destinées à reconstituer la veine secondaire 5B, circonférentiellement entre les aubes 7.

En référence aux figures 2 et 3, l'aube 7 forme un bord d'attaque 75, un bord de fuite 76, un intrados 77 et un extrados 78.

Le corps 71 de l'aube 7 est conformé de manière à définir une face de jonction 713 prévue pour fixer le capot 72 à ce corps 71.

Dans l'exemple de la figure 3, la face de jonction 713 comporte une partie 714 périphérique formant un renflement longeant à la fois le bord d'attaque 75, le pied 711, le bord de fuite 76, et la tête 712. Cette partie 714 de la face de jonction 713 forme sensiblement un rectangle.

La face de jonction 713 comporte aussi une partie 715 formant sensiblement un renflement selon une diagonale du rectangle formé par la partie 714.

Entre ces parties 714 et 715 de la face de jonction 713, le corps 71 comporte des parties creusées 716 destinées à réduire sa masse (voir figure 2).

La figure 4 fait apparaître une face interne du capot 72 destinée à venir en vis-à-vis de la face de jonction 713 du corps 71, de manière à fixer le capot 72 au corps 71 par collage d'une partie de cette face interne du capot 72 à ladite face de jonction 713.

Pour réaliser cet assemblage, le procédé de l'invention comprend une opération de dépôt d'une résine polymérisable sur la face de jonction 713 du corps 71.

Par exemple, cette résine peut comprendre un polymère liquide thermodurcissable du type résine époxy.

Alternativement ou complémentairement, la résine peut être déposée sur des parties du capot 72 qui seront situées en vis-à-vis de la face de jonction 713 après positionnement du capot 72 sur le corps 71. Il est préféré de déposer la résine sur la face de jonction 713 car celle-ci est structurellement délimitée, contrairement aux parties correspondantes de la face interne du capot 72, lesquelles sont agencées sur cette face interne sans discontinuité de surface.

Le procédé comprend une opération de positionnement du capot 72 sur la face de jonction 713 du corps 71, après dépôt de la résine sur cette face de jonction 713 et/ou sur lesdites parties correspondantes de la face interne du capot 72.

Cette opération de positionnement, ou d'accostage du capot 72 et du corps 71, est réalisée de sorte qu'une face externe 721 du capot 72 et une face externe 717 du corps 71 forment ensemble ledit intrados 77 de l'aube 7 (voir figure 2).

En référence à la figure 5, le procédé de l'invention comprend une opération de dépôt d'un cordon de mastic d'étanchéité 101 et une opération de mise en place d'une bâche 102.

Le cordon de mastic d'étanchéité 101 est déposé sur la face externe 717 du corps 71 de l'aube 7, autour de la face de jonction 713 - et plus précisément autour de la partie 714 périphérique de cette face de jonction 713 - le long d'une ligne fermée.

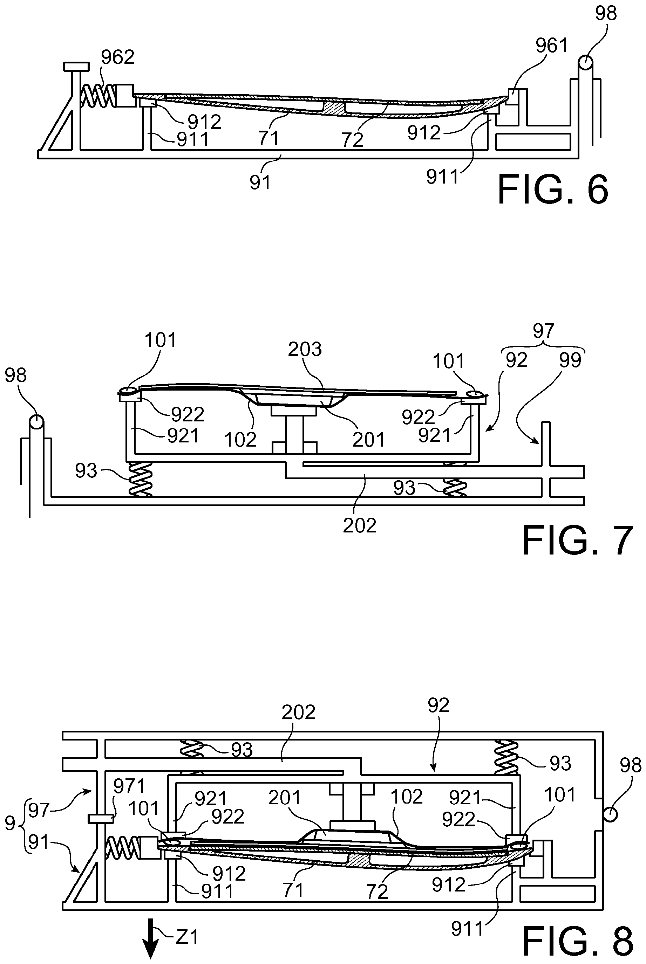

La bâche 102 est placée contre l'intrados 77 de l'aube 7, de préférence à l'aide de l'outillage 9 décrit ci-dessous en référence aux figures 6 à 8.

La bâche 102 est dimensionnée de sorte qu'une partie périphérique de celle-ci soit plaquée contre le cordon de mastic d'étanchéité 101 lors de la mise en place de cette bâche 102 contre l'intrados 77 de l'aube 7.

Le cordon de mastic d'étanchéité 101 est déposé de manière à délimiter un espace E9 compris entre la bâche 102 et l'intrados 77 de l'aube 7, de manière à mettre cet espace E9 sous vide (voir plus loin ci-dessous).

Les opérations de dépôt du cordon de mastic d'étanchéité 101 et de mise en place de la bâche 102 peuvent être réalisées manuellement, typiquement en déposant préalablement le cordon de mastic d'étanchéité 101 sur la face externe 717 du corps 71 puis en plaquant la bâche 102 contre l'intrados 77 de l'aube 7 et contre le cordon de mastic d'étanchéité 101.

Ces opérations peuvent aussi être réalisées à l'aide de l'outillage 9 représenté aux figures 6 à 8.

L'outillage 9 complet est représenté dans une configuration de plaquage à la figure 8. Les figures 6 et 7 montrent respectivement une partie inférieure 91 formant une partie fixe de cet outillage 9 (figure 6) et une partie supérieure 97 (figure 7) de cet outillage 9 dans une configuration ouverte.

La partie fixe 91 de l'outillage 9 comprend des éléments de réception 911 surmontés de patins 912 - par exemple en téflon - agencés pour recevoir l'extrados 78 de l'aube 7. Ces éléments de réception 911 forment une empreinte de l'extrados 78 de l'aube 7.

Les éléments de réception 911 sont configurés de sorte que, lorsque le capot 72 est positionné sur la face de jonction 713 du corps 71, ce capot 72 soit maintenu ainsi positionné sous l'action de la gravité. Ainsi, lorsque l'outillage 9 est dans la configuration ouverte, le capot 72 et le corps 71 peuvent rester correctement positionnés l'un par rapport à l'autre, tel qu'illustré à la figure 6.

En référence à la figure 6, la partie fixe 91 de l'outillage 9 comprend des moyens de maintien latéral du corps 71 de l'aube 7, ces moyens de maintien latéral comportant un élément de butée 961 et un ressort de compression 96.

L'opération de positionnement du capot 72 sur le corps 71 et/ou l'opération de dépôt de la résine peuvent être réalisées avant ou après positionnement du corps 71 sur les éléments de réception 911 de l'outillage 9.

La partie supérieure 97 et la partie inférieure fixe 91 de l'outillage 9 sont articulées l'une par rapport à l'autre par un organe d'articulation 98 permettant de faire passer l'outillage 9 de la configuration ouverte (figures 6 et 7) à la configuration de plaquage (figure 8).

En référence aux figures 7 et 8, la partie supérieure 97 de l'outillage 9 comprend un châssis 99 et une pièce d'appui 92 formant une partie mobile de l'outillage 9.

Dans cet exemple, la partie mobile d'appui 92 de l'outillage 9 comprend des éléments d'appui 921 surmontés de patins 922 - par exemple en téflon.

Cette partie mobile d'appui 92 est agencée pour recevoir fixement la bâche 102, cette dernière étant fixée à la partie mobile d'appui 92 à l'aide d'un adhésif, lorsque l'outillage 9 est dans la configuration ouverte (figure 7). Le cordon de mastic d'étanchéité 101 est de préférence déposé sur la bâche 102 après fixation de celle-ci sur la partie mobile d'appui 92, également lorsque l'outillage 9 est dans la configuration ouverte (figure 7).

Les éléments d'appui 921 sont agencés de sorte que, lorsque l'outillage 9 est dans la configuration de plaquage, ces éléments d'appui 921 soient situés au droit de la face externe 717 du corps 71 - en particulier au droit de parties de cette face externe 717 recevant le cordon de mastic d'étanchéité 101 - et en vis-à-vis des éléments de réception 911 de la partie inférieure fixe 91 de l'outillage 9 (voir figure 8).

Les éléments d'appui 921 forment une empreinte de la face externe 717 du corps 71 de l'aube 7.

Lorsque l'outillage 9 passe de la configuration ouverte (figures 6 et 7) à la configuration de plaquage (figure 8), la partie mobile d'appui 92 - qui appartient à la partie supérieure 97 de l'outillage 9 - est déplacée par rapport à la partie inférieure fixe 91, ce qui résulte en une disposition de la bâche 102 contre l'intrados 77 de l'aube 7 et, simultanément, en un dépôt du cordon de mastic d'étanchéité 101 sur la face externe 717 du corps 71 de l'aube 7.

Entre le châssis 99 et la partie mobile d'appui 92 sont montés des ressorts 93 qui forment avec la partie mobile d'appui 92 un dispositif de transmission d'effort. Ce dispositif de transmission d'effort est configuré pour plaquer cette partie mobile d'appui 92 contre le cordon de mastic d'étanchéité 101 de manière à exercer sur ce cordon 101 un effort de compression prédéterminé apte à sceller ledit espace E9 compris entre la bâche 102 et l'intrados 77 de l'aube 7. En référence à la figure 8 illustrant la configuration de plaquage de l'outillage 9, les ressorts 93 comprimés tendent en effet à éloigner la partie mobile d'appui 92 du châssis 99, selon un mouvement de translation suivant un sens Z1, en direction du corps 71 de l'aube 7.

L'effort de compression prédéterminé est typiquement équivalent à une pression de 0,1 MPa.

Dans la configuration de plaquage (figure 8), le châssis 99 de la partie supérieure 97 de l'outillage 9 est maintenu contre la partie inférieure fixe 91 par un verrou 971, et le corps 71 de l'aube 7 est bloqué en translation suivant le sens Z1 par les éléments de réception 911 de la partie inférieure fixe 91. La partie mobile d'appui 92 étant mobile par rapport au châssis 99 et à la partie inférieure fixe 91, les ressorts 93 peuvent ainsi exercer un effort de plaquage de la partie mobile d'appui 92 et par suite de la bâche 102 contre le cordon de mastic d'étanchéité 101, de manière à sceller l'espace E9.

Pour exercer sur le cordon de mastic d'étanchéité 101 un effort de compression sensiblement uniforme, les empreintes formées par les éléments de réception 911 de la partie inférieure fixe 91 et par les éléments d'appui 921 de la partie mobile d'appui 92 doivent respecter des tolérances dimensionnelles et/ou géométriques relativement réduites. Pour ce faire, ces empreintes peuvent être obtenues par moulage des parties correspondantes de l'aube 7.

Lorsque l'espace E9 compris entre la bâche et l'intrados est scellé, cet espace est alors mis sous vide à l'aide d'un dispositif d'extraction d'air conventionnel.

De manière connue en soi, le dispositif d'extraction d'air comprend dans cet exemple des connecteurs autoperforants 201 qui traversent la bâche 102, et un système de pompage 202. Des feutres de drainage 203 (cf. figures 5 et 7) sont interposés entre la bâche 102 et la face externe 721 du capot 72 de l'aube 7. Ces feutres de drainage 203 sont typiquement des nappes poreuses permettant de drainer l'air extrait de l'espace E9 mis sous vide ainsi que des volatils émis par la résine lors de sa polymérisation. Ces feutres de drainage 203 permettent aussi d'absorber des solvants ou excédents de résine.

Dans cet exemple, la fixation du capot 72 sur le corps 71 de l'aube 7 est réalisée par polymérisation de la résine lors d'une opération de chauffage au sein d'un autoclave (non représenté), à une température comprise entre 160°C et 180°C, dans une configuration dans laquelle le capot 72 est plaqué contre la face de jonction 713 du corps 71 de manière à exercer sur la résine un effort de compression prédéterminé. Un tel plaquage résulte dans cet exemple du différentiel de pression entre, d'une part, l'espace E9 compris entre l'intrados 77 de l'aube 7 et la bâche 102, cet espace E9 étant mis sous vide tel que décrit ci-dessus et, d'autre part, l'enceinte de l'autoclave dans lequel cet ensemble est placé.

## Revendications

1. Procédé d'assemblage d'une aube (7) pour aubage directeur de sortie d'un turboréacteur (1) d'aéronef à double flux, comprenant :
- une opération de dépôt d'une résine polymérisable sur une face de jonction (713) d'un corps (71) de ladite aube (7),
- une opération de positionnement d'un capot (72) de l'aube (7) sur la face de jonction (713) recouverte de la résine de sorte qu'une face externe (721) du capot (72) et une face externe (717) du corps (71) forment ensemble un intrados (77) de cette aube (7),
- une opération de mise en place d'une bâche (102) contre l'intrados (77) de l'aube (7),
- une opération de mise sous vide d'un espace (E9) compris entre la bâche (102) et l'intrados (77),
- une opération de chauffage apte à polymériser la résine et fixer ainsi le capot (72) sur le corps (71) de l'aube (7),
ce procédé comprenant, avant ou pendant l'opération de mise en place de la bâche (102) contre l'intrados (77) de l'aube (7), une opération de dépôt d'un cordon de mastic d'étanchéité (101) sur la face externe (717) du corps (71), autour de la face de jonction (713) du corps (71), de manière à délimiter ledit espace (E9) compris entre la bâche (102) et l'intrados (77), la bâche (102) étant dimensionnée de sorte qu'une partie périphérique de celle-ci soit plaquée contre le cordon de mastic d'étanchéité (101) lors de la mise en place de cette bâche (102) contre l'intrados (77) de l'aube (7).

2. Procédé selon la revendication 1, dans lequel le corps (71) et le capot (72) positionné sur la face de jonction (713) du corps (71) sont disposés sur une partie fixe (91) d'un outillage (9) et dans lequel la bâche (102) est fixée sur une partie mobile (92) de cet outillage (9), l'opération de mise en place de la bâche (102) comprenant une opération de déplacement de la partie mobile (92) par rapport à la partie fixe (91) de cet outillage (9) de manière à disposer la bâche (102) contre l'intrados (77) de l'aube (7).

3. Procédé selon la revendication 2, dans lequel le cordon de mastic d'étanchéité (101) est déposé sur la bâche (102) avant l'opération de déplacement de la partie mobile (92) de l'outillage (9), l'opération de dépôt de ce cordon de mastic d'étanchéité (101) sur la face externe (717) du corps (71) résultant de cette opération de déplacement de la partie mobile (92) par rapport à la partie fixe (91) de l'outillage (9).

4. Procédé selon la revendication 2 ou 3, comprenant, après l'opération de déplacement de la partie mobile (92) de l'outillage (9), une opération de plaquage de cette partie mobile (92) contre le cordon de mastic d'étanchéité (101) de manière à exercer sur ce cordon de mastic d'étanchéité (101) un effort de compression prédéterminé apte à sceller ledit espace (E9) compris entre la bâche (102) et l'intrados (77).

5. Outillage (9) pour mettre en oeuvre le procédé selon l'une quelconque des revendications 1 à 4, comprenant une partie fixe (91) et une partie mobile (92), la partie fixe (91) étant agencée pour recevoir le corps (71) de l'aube (7) et le capot (72) positionné sur la face de jonction (713) de ce corps (71), la partie mobile (92) étant agencée pour recevoir fixement la bâche (102) et pour être déplacée par rapport à ladite partie fixe (91) de cet outillage (9) de manière à disposer la bâche (102) contre l'intrados (77) de l'aube (7).

6. Outillage (9) selon la revendication 5 pour mettre en oeuvre le procédé selon la revendication 4, comprenant un dispositif de transmission d'effort (93) configuré pour exercer ledit effort de compression prédéterminé.

7. Outillage selon la revendication 6, dans lequel le dispositif de transmission d'effort (93) comprend un ou plusieurs organes élastiques tels que des ressorts.

## Patentansprüche

1. Verfahren zum Montieren einer Schaufel (7) für die Auslassleitschaufel eines Strahltriebwerks (1) eines Doppelstromluftfahrzeugs, umfassend:
- einen Schritt des Abscheidens eines polymerisierbaren Harzes auf einer Verbindungsfläche (713) eines Körpers (71) der Schaufel (7),
- einen Schritt des Positionierens eine Haube (72) der Schaufel (7) auf der Verbindungsfläche (713), die mit dem Harz beschichtet ist, so dass eine Außenfläche (721) der Haube (72) und eine Außenfläche (717) des Körpers (71) zusammen eine Laibung (77) dieser Schaufel (7) bilden,
- einen Schritt des Anbringens einer Abdeckung (102) an der Laibung (77) der Schaufel (7),
- einen Schritt des Vakuumierens eines Zwischenraums (E9), der zwischen der Abdeckung (102) und der Laibung (77) enthalten ist,
- einen Schritt des Erwärmens, der geeignet ist, das Harz zu polymerisieren und somit die Haube (72) auf dem Körper (71) der Schaufel (7) zu befestigen,
wobei dieses Verfahren Folgendes umfasst:
vor oder während des Schritts des Anbringens der Abdeckung (102) an der Laibung (77) der Schaufel (7) einen Schritt des Ablegens eines Dichtungsmassenstrangs (101) auf der Außenfläche (717) des Körpers (71) um die Verbindungsfläche (713) des Körpers (71) herum, um den Zwischenraum (E9) zu begrenzen, der zwischen der Abdeckung (102) und der Laibung (77) enthalten ist, wobei die Abdeckung (102) derart bemessen ist, dass ein Umfangsteil davon gegen den Dichtungsmassenstrang (101) beim Anbringen dieser Abdeckung (102) an der Laibung (77) der Schaufel (7) gedrückt wird.

2. Verfahren nach Anspruch 1, wobei der Körper (71) und die auf der Verbindungsfläche (713) des Körpers (71) positionierte Haube (72) an einem feststehenden Teil (91) einer Vorrichtung (9) angeordnet sind und wobei die Abdeckung (102) an einem beweglichen Teil (92) dieser Vorrichtung (9) befestigt ist, wobei der Schritt des Anbringens der Abdeckung (102) einen Schritt des Bewegens des beweglichen Teils (92) relativ zu dem feststehenden Teil (91) dieser Vorrichtung (9) umfasst, um die Abdeckung (102) an der Laibung (77) der Schaufel (7) anzuordnen.

3. Verfahren nach Anspruch 2, wobei der Dichtungsmassenstrang (101) vor dem Schritt des Bewegens des beweglichen Teils (92) der Vorrichtung (9) auf der Abdeckung (102) abgelegt wird, wobei der Schritt des Ablegens dieses Dichtungsmassenstrangs (101) auf der Außenfläche (717) des Körpers (71) zu dem Schritt des Bewegens des beweglichen Teils (92) relativ zum feststehenden Teil (91) der Vorrichtung (9) führt.

4. Verfahren nach Anspruch 2 oder 3, umfassend nach dem Schritt des Verlagerns des beweglichen Teils (92) der Vorrichtung (9) einen Schritt des Pressens dieses beweglichen Teils (92) gegen den Dichtungsmassenstrang (101), um so auf diesen Dichtungsmassenstrang (101) eine vorbestimmte Druckkraft auszuüben, die geeignet ist, den Zwischenraum (E9) abzudichten, der zwischen der Abdeckung (102) und der Laibung (77) enthalten ist.

5. Vorrichtung (9) zum Durchführen des Verfahrens nach einem der Ansprüche 1 bis 4, umfassend einen feststehenden Teil (91) und einen beweglichen Teil (92), wobei der feststehende Teil (91) angeordnet ist, um den Körper (71) der Schaufel (7) aufzunehmen, und die Haube (72) auf der Verbindungsfläche (713) des Körpers (71) positioniert ist, wobei der bewegliche Teil (92) angeordnet ist, um die Abdeckung (102) fest aufzunehmen und relativ zu dem feststehenden Teil (91) der Vorrichtung (9) bewegt zu werden, um die Abdeckung (102) an der Laibung (77) der Schaufel (7) anzuordnen.

6. Vorrichtung (9) nach Anspruch 5 zum Durchführen des Verfahrens nach Anspruch 4, umfassend eine Kraftübertragungseinrichtung (93), die konfiguriert ist, die vorbestimmte Druckkraft auszuüben.

7. Vorrichtung nach Anspruch 6, wobei die Kraftübertragungseinrichtung (93) ein oder mehrere elastische Elemente wie Federn umfasst.

## Claims

1. A method for assembling a vane (7) for the outlet guide vane of an aircraft turbofan engine (1), comprising:
- an operation of depositing a polymerisable resin onto a junction face (713) of a body (71) of said vane (7),
- an operation of positioning a cover (72) of the vane (7) onto the junction face (713) covered with the resin so that an outer face (721) of the cover (72) and an outer face (717) of the body (71) together form a front side (77) of this vane (7),
- an operation of placing a sheet (102) against the front side (77) of the vane (7),
- an operation of vacuumising a space (E9) included between the sheet (102) and the front side (77),
- a heating operation capable of polymerising the resin and thus attaching the cover (72) to the body (71) of the vane (7),
this method comprising, before or during the operation of placing the sheet (102) against the front side (77) of the vane (7), an operation of depositing a bead of sealant (101) onto the outer face (717) of the body (71), about the junction face (713) of the body (71) so as to delimit said space (E9) included between the sheet (102) and the front side (77), the sheet (102) being dimensioned so that a peripheral thereof is pressed against the bead of sealant (101) upon placing this sheet (102) against the front side (77) of the vane (7).

2. The method according to claim 1, wherein the body (71) and the cover (72) positioned on the junction face (713) of the body (71) are disposed on a fixed part (91) of a tooling (9) and in which the sheet (102) is attached to a movable part (92) of this tooling (9), the operation of placing the sheet (102) comprising an operation of moving the movable part (92) relative to the fixed part (91) of that tooling (9) so as to dispose the sheet (102) against the front side (77) of the vane (7).

3. The method according to claim 2, wherein the bead of sealant (101) is deposited onto the sheet (102) before the operation of moving the movable part (92) of the tooling (9), the operation of depositing this bead of sealant (101) onto the outer face (717) of the body (71) resulting from this operation of moving the movable part (92) relative to the fixed part (91) of the tooling (9).

4. The method according to claim 2 or 3, comprising, after the operation of moving the movable part (92) of the tooling (9), an operation of pressing this movable part (92) against the bead of sealant (101) in such a way as to exert on this bead of sealant (101) a predetermined compression force capable of sealing said space (E9) included between the sheet (102) and the front side (77).

5. A tooling (9) for implementing the method according to any one of claims 1 to 4, comprenant a fixed part (91) and a movable part (92), the fixed part (91) being arranged to receive the body (71) of the vane (7) and the cover (72) positioned on the junction face (713) of this body (71), the movable portion (92) being arranged to fixedly receive the sheet (102) and to be moved relative to said fixed part (91) of that tooling (9) so as to dispose the sheet (102) against the front side (77) of the vane (7).

6. The tooling (9) according to claim 5 for implementing the method according to claim 4, comprising a force transmission device (93) configured to exert said predetermined compression force.

7. The tooling according to claim 6, wherein the force transmitting device (93) comprises one or more elastic members such as springs.
